# EUROPEAN PATENT APPLICATION

(11) **EP 0 683 981 A1**
(43) Date of publication of application: **29.11.1995**
(21) Application number: 94905866.3
(22) Date of filing: 08.02.1994
(51) Int. Cl.: A21C 3/04, A23P 1/12, A23G 3/28, A21C 11/16

(54) **DOUGH SQUEEZING NOZZLE FOR FOOD MACHINES**

(71) Applicant: MASAMI SANGYO CO., LTD., Tokyo 101 (JP)
(72) Inventor: TAKAHASHI, Masami, Masami Sangyo Co., Ltd., Tokyo 101 (JP)
(74) Representative: Linn, Samuel Jonathan
(86) International application number: JP9400187
(87) International publication number: WO9521531

(57) **Abstract**

A dough squeezing nozzle 10 in a food processing machine which squeezes dough to be molded into a predetermined shape, characterized in that the nozzle 10 is made of nonadhesive material which can expand and contract and which is divided broadly into two main portions, a nozzle barrel portion 11 and a nozzle tip portion 12, wherein the nozzle tip portion 12 is provided at the forefront thereof with an opening portion 13 having a plurality of radial slots 15 formed at its periphery and is thinner than said nozzle barrel portion 11.

## Description

### BACKGROUND OF THE INVENTION

### Field of the Invention

The present invention relates to a nozzle for squeezing dough in a food processing machine, and more particularly to a dough squeezing nozzle which can expand and contract, and open and close an opening portion, corresponding to a discharge pressure applied when the dough is squeezed, thereby squeezing the dough out of the opening without damage.

### Description of the Related Art

In a dough squeezing nozzle of a food processing machine in which a water containing material in paste form (dough), used as a food material, especially the material for confectionery, is molded in a predetermined shape by squeezing the dough out of the nozzle, it is necessary to squeeze the dough stably without damaging the same. In order to avoid damage to the dough, it is also necessary to avoid applying a heavy discharge pressure to the dough when squeezed from the nozzle.

There is generally provided a dough squeezing nozzle for a food processing machine which is, for example, made of a metal such as brass in an inverted conical form. The nozzle is provided at its tip portion with an opening portion. When it is required to mold the dough into a foodstuff with a predetermined shape using this nozzle, pressure is usually applied to the dough kept within a hopper by a roll and the like so that the dough can be supplied to the nozzle.

However, in such a conventional dough squeezing nozzle made of metal, there are problems described below due to the fact that the nozzle itself is not designed to expand and contract and the opening portion formed at the tip portion Of the nozzle is not adapted to open and close (expand and contract):
1) When the dough is squeezed at a small discharge pressure to avoid damage, it is not fully squeezed out of the nozzle, resulting in the molding defect. When a hard dough with a reduced water content is used, it becomes impossible to mold it into a product.
2) In order to avoid causing such a forming defect, it is imperative to apply a high pressure to the dough. In such a case, the dough is susceptible to damage when passed through the nozzle, resulting in a deterioration in the taste of the product.
3) When watery dough, i.e. the dough containing much water, is used, it is necessary to close the opening portion each time the dough is squeezed to prevent it from dripping. In this case, an additional means is needed to close the opening portion of the nozzle, which makes the structure complicated and larger,which in turn leads to a large-sized food processing machine.
4) In order to improve the cutting quality of the dough after squeezing, a dough cutting means must be provided and also since the dough is mechanically cut, the outward appearance of the product shape after molding is unattractive.
5) To mold a product in different sizes, many types of nozzles with different calibers in the opening portion according to the size of the product must be provided.

It is therefore an object of the present invention to solve the foregoing problems of the conventional metal nozzle and provide an improved dough squeezing nozzle in a food processing machine which can provide a good molding at a low discharge pressure.

It is another object of the present invention to provide an improved dough squeezing nozzle in a food processing machine which can squeeze even hard dough without causing damage thereto.

It is a further object of the present invention to provide an improved dough squeezing nozzle in a food processing machine which does not require any additional means to close an opening portion of a nozzle even in the case of watery dough.

It is a still further object of the present invention to provide an improved dough squeezing nozzle in a food processing machine which does not require any additional means for cutting dough after the squeezing operation and can contribute to a good outward appearance of the product.

It is a still further object of the present invention to provide an improved dough squeezing nozzle in a food processing machine which can mold products of different sizes with only one nozzle.

### SUMMARY OF THE INVENTION

In order to attain the above-mentioned objects, according to the present invention, a dough squeezing nozzle is provided in a food processing machine with the following structure.

Namely, according to claim 1 of the present invention, a nozzle is provided which is made of nonadhesive material which can expand and contract, and which is divided broadly into two main portions, specifically a nozzle barrel portion and a nozzle tip portion, wherein the nozzle tip portion is provided at its forefront with an opening portion having a plurality of radial slots formed at its periphery and is thinner than said nozzle barrel portion.

Next, according to claim 2 of the present invention, a nozzle is provided which is made of nonadhesive material which can expand and contract, and which is divided broadly into two main portions, specifically a nozzle barrel portion and a nozzle tip portion, wherein the nozzle tip portion is provided with a plurality of slots extending radially from its forefront and is thinner than the nozzle barrel portion.

Further, according to claim 3 of the present invention, a nozzle is provided which is made of a nonadhesive material which can expand and contract, and which is divided broadly into two main portions, specifically a nozzle barrel portion and a nozzle tip portion, wherein the nozzle tip portion is provided at its forefront with an opening portion and is thinner than the nozzle barrel portion.

In the nozzle of claim 1 having such a construction as described above, when dough kept in a hopper is fed into a dough chamber by rotating a roller and is then fed into a nozzle from the dough chamber at a discharge pressure which does not damage the dough, the nozzle starts to expand corresponding to the discharge pressure and the opening portion of the nozzle tip is enlarged along the slots so as to squeeze the dough.

The dough is sucked up into the dough chamber after it is squeezed in a predetermined quantity and then the nozzle contracts to narrow the opening portion, thereby squeezing the dough to cut it.

With this construction, the dough is squeezed out of the nozzle only by the movement of the nozzle without damage so as to mold a desirable product.

Subsequently, in the nozzle according to claim 2, when the dough kept in the hopper is fed into the dough chamber by rotating the roller, and is then fed into the nozzle from the dough chamber at a discharge pressure which does not damage the dough, the nozzle starts to elongate and expand corresponding to the discharge pressure and the forefront of the nozzle tip portion with the slots is opened to squeeze the dough.

Then, after the dough is squeezed in the predetermined quantity, it is sucked up into the dough chamber and the nozzle contracts to close the forefront of the nozzle tip portion, thereby squeezing the dough to cut it.

With this construction, the dough is squeezed out of the nozzle only by the movement of the nozzle itself without damage so as to mold a desirable product.

Referring now to the nozzle according to claim 3, the dough within the hopper is fed into the dough chamber by the rotation of the roller, and is then fed into the nozzle from the dough chamber at a discharge pressure which does not damage the dough. At this stage, the nozzle starts to elongate and expand corresponding to the discharge pressure and with this expansion of the nozzle, the opening portion of the nozzle tip portion enlarges to squeeze the dough out.

When the dough is squeezed in the predetermined quantity, it is sucked up into the dough chamber and then the nozzle contracts to narrow the opening portion, thereby squeezing the dough to cut it.

Thus, the dough is squeezed out of the nozzle without damage only by the movement of the nozzle itself so as to mold a desirable product.

As described above, according to the dough squeezing nozzle in the food processing machine of the present invention, the nozzle is designed to expand and contract corresponding to the pressure applied to the dough and the dough is not subjected to an heavy pressure inside of the nozzle when squeezed. This means that the dough is squeezed out of the nozzle without damage and a food with good taste can be obtained.

Further, since the nozzle tip portion is adapted to open and close with the elasticity of the nozzle, it is possible to cut the dough automatically after squeezing and there is no necessity to provide an additional means for cutting the dough.

### BRIEF DESCRIPTION OF THE DRAWINGS

The above and other objects, features, and advantages of the invention will become more apparent from the following description when taken in conjunction with the accompanying drawings, wherein:

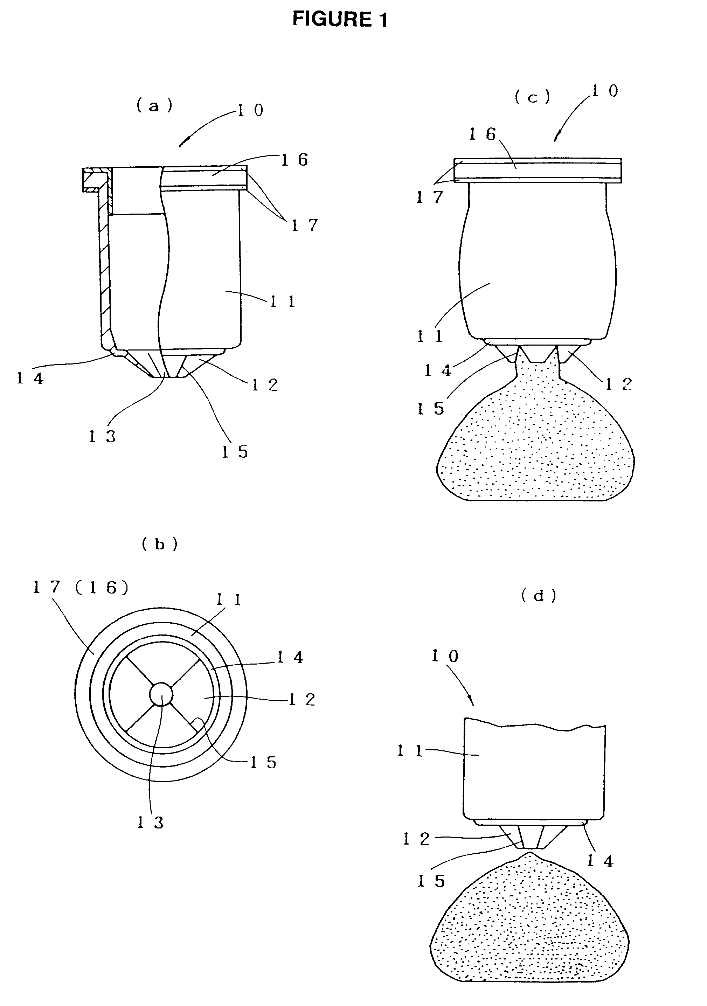

Fig.1 shows one embodiment of a dough squeezing nozzle in a food processing machine according to the present invention, wherein reference letter (a) is a front elevational view showing a nozzle partially cut away; reference letter (b) is a bottom plan view of the nozzle; letter (c) is a view explaining the condition in which dough is being squeezed; and (d) is a view explaining the condition in which the squeezing operation on the dough is completed, respectively;

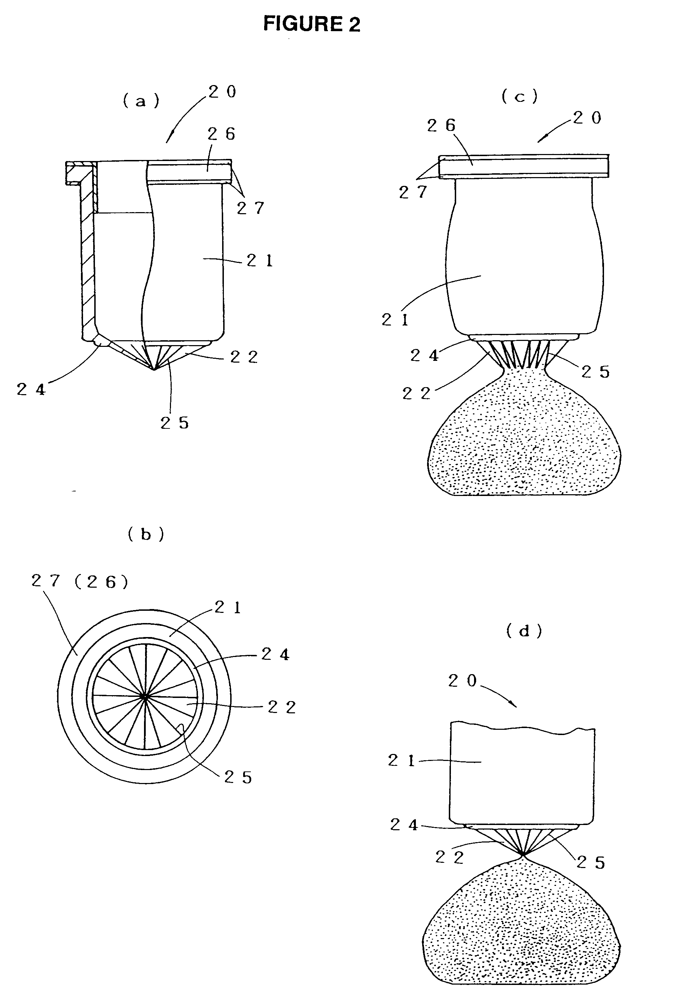

Fig.2 is another preferred embodiment of a dough squeezing nozzle in a food processing machine according to the present invention, wherein reference letter (a) is a front elevational view showing a nozzle partially cut away; letter (b) is a bottom plan view of the nozzle; (c) is a view explaining the condition in which dough is being squeezed; and (d) is a view explaining the condition in which the squeezing operation on the dough is completed, respectively;

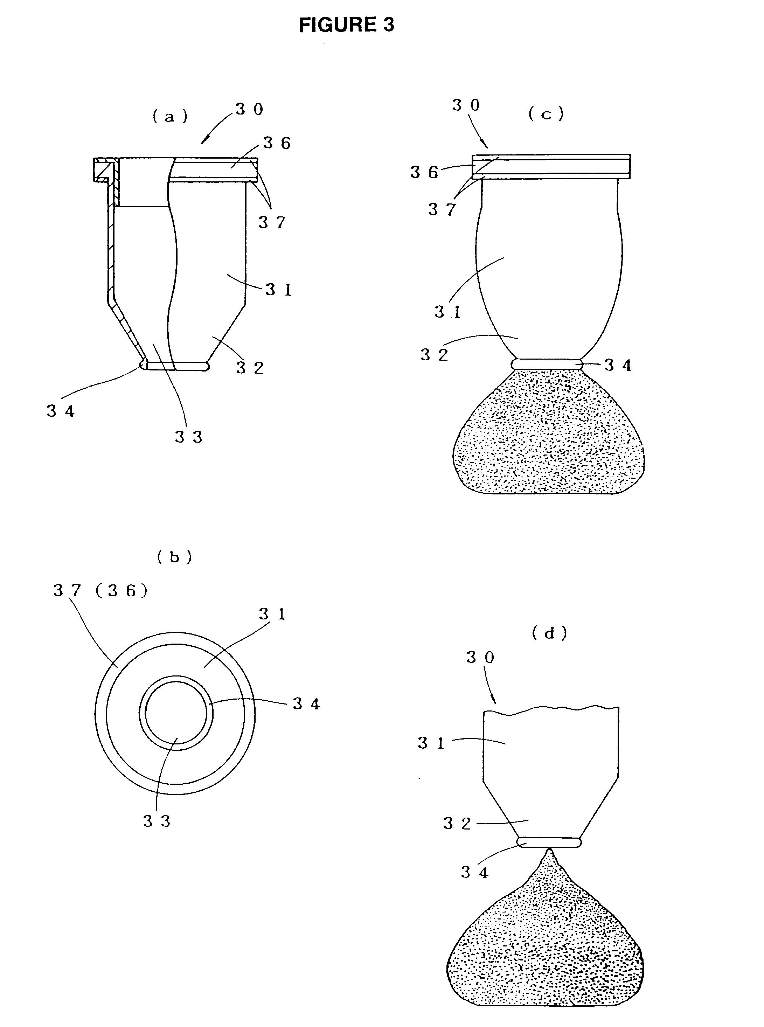

Fig.3 is still another preferred embodiment of a dough squeezing nozzle in a food processing machine according to the present invention, wherein reference letter (a) is a front elevational view showing a nozzle partially cut away; (b) is a bottom plan view of the nozzle; (c) is a view explaining the condition in which dough is being squeezed; and (d) is a view explaining the condition in which the squeezing operation on the dough is completed, respectively;

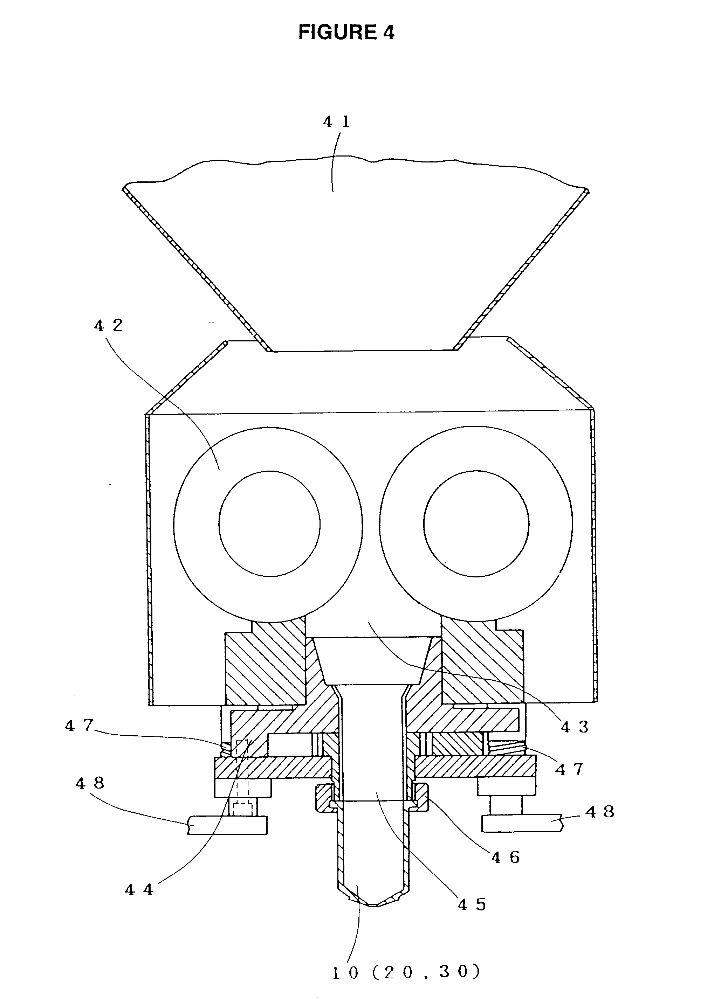

Fig.4 is a view explaining a condition in which a nozzle according to the present invention is attached to a food processing machine, wherein dough is being squeezed therefrom; and

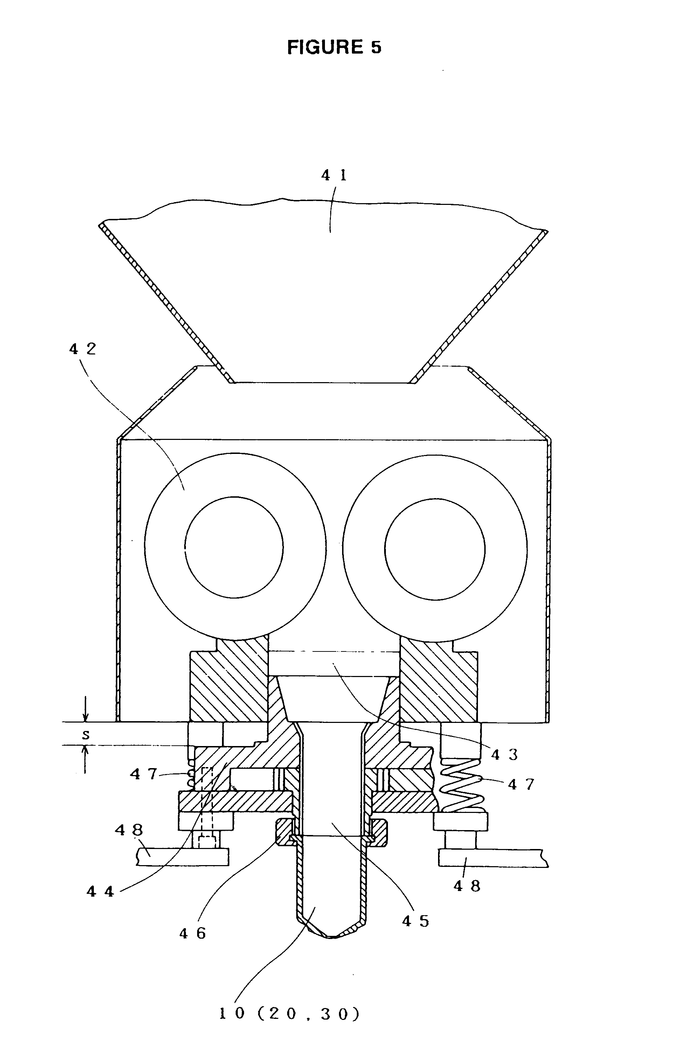

Fig.5 is a view explaining the condition in which a nozzle according to the present invention is attached to a food processing machine, wherein the dough squeezing operation is completed.

### DETAILED DESCRIPTION OF THE PREFERRED EMBODIMENTS

In order to facilitate a better understanding of the present invention, preferred embodiments will be described with reference to the accompanying drawings.

Fig.1 shows one embodiment of a nozzle according to claim 1, wherein reference letter (a) is a front elevational view showing a nozzle partially cut away and (b) is a bottom plan view thereof, respectively.

The nozzle is molded of totally elastic material such as silicone rubber which can expand and contract and is suitable for sliding dough therein.

The nozzle consists of a cylindrical nozzle barrel portion 11 and a tapered nozzle tip portion 12 integrally formed with the nozzle barrel portion 11.

The nozzle tip portion 12 is provided at its forefront (nozzle forefront) with an opening portion 13 and a thick flange portion 14 is also provided in the vicinity of a contact portion of the tip portion 12 with the barrel portion 11 which is coaxial with the opening portion 13.

It is to be noted that this nozzle tip portion 12 is designed to be thinner than the nozzle barrel portion 11 so as to be expansible and contractible, and, in particular, it is desirable to have the thickness of the tip end portion decrease gradually toward the forefront so that the opening portion 13 is easily opened and closed.

A plurality of radial slots 15 are further provided around the opening portion 13 between the opening portion 13 of the nozzle tip portion 12 and the flange portion 14.

A metal protector 17 is also mounted on an upper flange portion 16 of the nozzle barrel portion 11.

The nozzle 10 with such a construction is, for example, attached to a food processing machine for practical use, a part of which is shown in Figs. 4 and 5.

Referring now to Figs.4 and 5, reference numeral 41 is a hopper, numeral 42 is a roller disposed below the hopper 41, and numeral 43 is a dough chamber formed below the roller 42, respectively, which form a material feeding portion 40 of the food processing machine. Reference numeral 44 is a squeezing base which is provided at its center portion with a communicating passage 45, the upper part of which is disposed below the dough chamber 43, while the lower part of the communicating passage 45 is arranged to be connected through a nut 46 to the nozzle 10.

The squeezing base 44 is attached to the lower part of the material feeding portion 40 through a spring 47. Accordingly, when the material feeding portion 40 is lowered, the squeezing base 44 is also lowered to contact a stopper 48 (refer to Fig.4) and in this condition, squeezing of the dough is effected as described below.

Subsequently, even if the dough squeezing operation is completed and the material feeding portion 40 is raised a little, the squeezing base 44 is kept in contact with the stopper 48 by the spring 47, namely, even if the material feeding portion 40 is raised by the distance shown by a letter "s" in Fig.5, the squeezing base 44 is kept as is. Accordingly, the capacity of the dough chamber 43 is increased (see Fig.5) to cause negative pressure therein thereby effectively sucking up the dough inside of the nozzle 10.

After this, when the material feeding portion 40 is raised further, the squeezing base 44 is also raised to remove the nozzle 10 from the squeezed product.

Fig.1 (c) is a view showing the condition in which said nozzle 10 is attached to a food processing machine of Fig.4, wherein the dough is being squeezed out of the nozzle, while Fig.1 (d) is likewise a view showing the condition in which the dough squeezing operation is completed.

As shown in these figures, in order to squeeze the dough, when the dough is fed at a predetermined pressure into the nozzle 10 through the dough chamber 43 and the communicating passage 45 from the hopper 41 of the food processing machine, the nozzle barrel portion 11 starts to elongate and expand so as to open the slotted portions 15 of the nozzle tip portion 12, thereby enlarging the forefront opening portion 13 to squeeze the dough therefrom.

In this case, a pressure applied to the dough is almost equivalent to the pressure required for the dough to be fed from the dough chamber to the nozzle. With the help of the expansion and contraction operation of the nozzle itself, such a heavy pressure as seen in the conventional nozzle made of metal, which does not expand and contract, is never applied to the dough within the nozzle in the present invention.

Accordingly, it is possible to squeeze the dough without damage.

Further, when the squeezing operation on the dough is completed, the food processing machine stops the rotation of the roller 42 and raises the material feeding portion 40, whereby the capacity of the dough chamber 43 is temporarily increased to import a negative pressure to the inside. As a result, the dough fed to the nozzle 10 is sucked up. The nozzle 10 then contracts at its barrel portion 11 and the tip portion 12 is closed to narrow the opening portion 13. Thus the dough is cut by the action of the nozzle 10.

It is therefore not necessary to provide any additional means for cutting the dough.

Fig.2 shows one embodiment of a nozzle according to claim 2, wherein reference letter (a) is a front elevational view showing a nozzle partially cut away; reference letter (b) is a bottom plan view; (c) is a view explaining the condition in which dough is being squeezed; and (d) is a view explaining the condition in which a dough squeezing operation is completed, respectively.

In this case, the nozzle 20 is characterized in that an opening portion is not provided at the forefront of the nozzle tip portion 22, but the nozzle 20 provided with a plurality of radial slots 25 between the nozzle forefront and a flange portion 24. As apparent in this embodiment, the nozzle 21 is arranged to have more slots 25 than the previous embodiment.

A nozzle barrel portion 21, a flange portion 26 and a metal protector 27 and the like are the same as those used in the previous embodiment.

Referring now to the nozzle 20 according to this embodiment, when the dough is fed into the nozzle 20 through a dough chamber 43 and a communicating passage 45 from a hopper 41 of a food processing machine in the same manner as seen in the nozzle 10, the forefront of the nozzle tip portion 22 is opened to form an opening portion, out of which the dough is squeezed. When the dough squeezing operation is completed, the dough is sucked up into the dough chamber and the forefront of the nozzle tip portion 22 is completely closed to cut the dough.

The nozzle according to this embodiment is suitable for squeezing softer dough containing more water (that is, a watery dough) than that intended for the nozzle of the above-mentioned embodiment. In this case, the watery dough is prevented from dropping from the nozzle tip portion 22 since the latter is designed to be completely closed.

It is also to be noted that in these nozzles 10 and 20 provided with slots 15 and 25 at the nozzle tip portions 12 and 22, linear patterns can be left on the surface of the dough squeezed.

Fig.3 shows one embodiment of the nozzle according to claim 3, wherein reference letter (a) is a front elevational view showing a nozzle partially cut away; reference letter (b) is a bottom plan view; (c) is a view explaining the condition in which dough is being squeezed out of the nozzle; and (d) is a view explaining the condition in which the dough squeezing operation is completed.

The nozzle 30 according to this embodiment is characterized in that the a slot is not provided at a nozzle tip portion 32, but the nozzle 30 is provided at its forefront with an opening portion 33. Further, when a thick flange portion 34 is provided at the periphery of the opening portion 33, it is possible to prevent the former from causing lacerations and also to increase the dough cutting force caused when the opening portion 33 starts to contract.

In this embodiment, a nozzle barrel portion 31, a flange portion 36, a metal protector 37 and the like are the same as those of the above mentioned embodiments.

In the nozzle 30 according to this embodiment, as seen in the nozzle 10, when dough is fed from a hopper 41 of a food processing machine into the nozzle 30 through a dough chamber 43 and a communicating passage 45, the opening portion 33 at the forefront of the nozzle is opened to squeeze the dough out. Also, after the dough squeezing operation is completed, the dough is sucked up into the dough chamber and the opening portion 33 of the nozzle forefront is narrowed so as to cut the dough.

The nozzle according to this embodiment is suitable for squeezing a dough with less water than that intended for the above-mentioned two embodiments.

It is to be noted that the dough squeezing nozzle used in the food processing machine according to the present invention is not limited to the embodiments described above and various modifications and applications are possible within the spirit and scope of this invention.

It is also possible for this nozzle to be used as an outer nozzle of a multiple nozzle which is adapted to mold confectionery mixed with cream and candy in the dough. It is further possible for this nozzle to be attached to various kinds of food processing machines other than that shown in Fig.4.

According to the dough squeezing nozzle in the food processing machine described above, it is also possible to mold products in any optional sizes corresponding to the opening, i.e. the discharge pressure, if pressure is applied when the dough is discharged, is changed so as to adjust the opening of the opening portion at the forefront of the nozzle.

As apparent from the foregoing description, a dough squeezing nozzle used in a food processing machine according to the present invention can be effectively employed in various types of food processing machines for such a process that paste material (dough) containing water, used as the material for foodstuffs, especially material for confectionery, is squeezed out of a nozzle to be molded into a predetermined shape.

## Claims

1. A dough squeezing nozzle in a food processing machine which squeezes dough to be molded into a predetermined shape, characterized in that the nozzle is made of nonadhesive material which can expand and contract and which is divided broadly into two main portions, a nozzle barrel portion and a nozzle tip portion, wherein the nozzle tip portion is provided at the forefront thereof with an opening portion having a plurality of radial slots formed at its periphery and is thinner than said nozzle barrel portion.

2. A dough squeezing nozzle in a food processing machine which squeezes dough to be molded into a predetermined shape, characterized in that the nozzle is made of nonadhesive material which can expand and contract and which is divided broadly into two main portions, a nozzle barrel portion and a nozzle tip portion, wherein the nozzle tip portion is provided with a plurality of slots radially extending from the forefront thereof and is thinner than the nozzle barrel portion.

3. A dough squeezing nozzle in a food processing machine which squeezes dough to be molded into a predetermined shape, characterized in that the nozzle is made of nonadhesive material which can expand and contract and which is divided broadly into two main portions, a nozzle barrel portion and a nozzle tip portion, wherein the nozzle tip portion is provided at the forefront thereof with an opening portion and is thinner than the nozzle barrel portion.

4. A dough squeezing nozzle in a food processing machine according to claim 3, wherein the opening portion formed at the forefront of the nozzle tip portion is provided at its periphery with a thick flange portion.

5. A dough squeezing nozzle in a food processing machine according to claim 1, 2, 3 or 4, wherein the nonadhesive material which can expand and contract is silicone rubber.
